# EUROPÄISCHE PATENTSCHRIFT

(11) **EP 1 940 672 B1**
(45) Veröffentlichungstag und Bekanntmachung des Hinweises auf die Patenterteilung: **11.05.2011**
(21) Anmeldenummer: 06777011.5
(22) Anmeldetag: 23.08.2006
(51) Int. Cl.: B62D 5/06, B62D 5/065

(54) **LENKEINRICHTUNG MIT DRUCKBEGRENZUNGSVENTIL ZUR ENDLAGENDÄMPFUNG UND ÜBERLASTSCHUTZ DER PUMPE**
STEERING MECHANISM COMPRISING A PRESSURE RELIEF VALVE FOR DAMPING THE END POSITION AND PROTECTING THE PUMP FROM BEING OVERLOADED
SYSTEME DE DIRECTION COMPRENANT UNE SOUPAPE DE LIMITATION DE PRESSION POUR REALISER UN AMORTISSEMENT DE POSITION EXTREME ET UNE PROTECTION CONTRE LA SURCHARGE D'UNE POMPE

(30) Priorität: 28.10.2005 DE 102005052078
(43) Veröffentlichungstag der Anmeldung: 09.07.2008
(73) Patentinhaber: ThyssenKrupp Presta SteerTec GmbH, 40476 Düsseldorf (DE)
(72) Erfinder: LANGKAMP, Bernd, 73669 Lichtenwald (DE); BREUNING, Edwin, 73770 Denkendorf (DE)
(74) Vertreter: Lenzing Gerber Stute
(86) Internationale Anmeldenummer: PCT/EP2006/008247
(87) Internationale Veröffentlichungsnummer: WO 2007/048458

(56) Entgegenhaltungen:
- DE-A1- 10 239 143
- DE-A1- 10 311 444
- US-A- 5 277 028

## Beschreibung

Die vorliegende Erfindung betrifft eine Lenkeinrichtung nach den Merkmalen des Oberbegriff des Anspruchs 1.

Gattungsgemäße Lenkeinrichtungen sind hinlänglich bekannt. Zum Überlastschutz der Pumpe und zur Endlagendämpfung weisen diese Überstromkanäle auf, über die das Hydraulikmedium kurz vor Erreichen einer Endlage von einem Arbeitsraum zum anderen Arbeitsraum überströmen kann und somit der Servodruck abgebaut wird. Die Überstromkanäle können, wie aus der DE 42 21 459 oder der DE 938527 bekannt, durch in der Innenwandung des Arbeitszylinders eingearbeitete Nuten gebildet sein, welche im Bereich der Endlagen angeordnet sind. Befindet sich der Kolben in einer Endlage so kann das Hydraulikmedium von einem Arbeitsraum über die Nuten am Kolben vorbei in den anderen Arbeitsraum gelangen.

Ferner ist bekannt, am doppeltwirkenden Arbeitszylinder Überstromkanäle unmittelbar anzuordnen. Diese Überstromkanäle sind dabei entweder direkt mittels Bohrungen in das Gehäuse des Arbeitszylinders eingearbeitet oder über zusätzliche Kanäle an der Außenseite des Arbeitszylinders angeordnet. Auch können Ventile, wie z.B. ein Druckbegrenzungsventil in dem Überstromkanal angeordnet sein, wie es aus der DE-OS 1 755 048 bekannt ist.

Aus der US 5,277,028 ist eine Fahrzeuglenkung bekannt, bei der ein übermäßiger Temperaturanstieg des Hydraulikmediums verhindert wird, wenn der vom Verbraucher abgenommene Volumenstrom extrem absinkt bzw. verschwindet.

Aus der DE 10311444 und der DE 10239143, die dem Oberbegriff des Anspruchs 1 entsprechen, sind Lenkungen bekannt, die einen doppeltwirkenden hydraulischen Arbeitszylinder aufweisen, der von einem im Arbeitszylinder verschieblich gelagerten Kolbem zum Verschwenken mindestens eines Fahrzeugrades in zwei Arbeitsräume unterteilt ist. Diese Lenkungen verfügen ferner über ein Druckbegrenzungsventil, welches bei Überschreiten eines bestimmten Drucks in der Zuführleitung zum Drehschieberventil zumindest einen Teil des gesamten Volumenstroms des Hydraulikmediums vorbei an dem Drehschieberventil zum Reservoir leitet.

Nachteilig bei den vorbeschriebenen Lenkeinrichtungen ist, dass die Überstromkanäle zum Abbau des Servodrucks bei Erreichen der Endlage direkt am oder im Arbeitszylinder angeordnet sind und lediglich zu einem Umströmen des Kolbens führen, wodurch nachteilig Strömungsgeräusche verbunden sind und zudem der Aufbau des Arbeitszylinders technisch aufwendiger und dessen Gehäuseabmessungen vergrößert werden. Des weiteren ist beim Herauslenken aus der Endlage keine Servounterstützung vorhanden, d. h. in diesem Bereich kann nur mechanisch gelenkt werden.

Aufgabe der vorliegenden Erfindung ist es daher, eine bestehende Lenkeinrichtung dahingehend weiter zu entwickeln, dass eine Begrenzung des Servodrucks kurz vor oder bei Erreichen der Endlage erfolgt, wobei eine Endlagendämpfung und ein Überlastschutz der Pumpe durch zusätzliche Kühlung des Hydraulikmediums erzielt wird.

Diese Aufgabe wird erfindungsgemäß mit einer Lenkeinrichtung mit den Merkmalen des Anspruchs 1 gelöst. Vorteilhafte Ausgestaltungen ergeben sich durch die Merkmale der Unteransprüche.

Durch den Einsatz eines parallel zur Standartlenkung bzw. dessen Drehschieberventils und Arbeitszylinder getrennt angeordneten Überdruckventils kann bei einer Standartlenkung eine Endlagendämpfung und eine zusätzliche Kühlleistung über den Zu- bzw. Rücklaufschlauch erzielt werden, ohne technische Veränderungen am doppeltwirkenden Arbeitszylinder vornehmen zu müssen.

Durch den vorteilhaften Einsatz des Druckbegrenzungsventils in einer geschwindigkeitsabhängigen Lenkung kann auch im Parkierbereich eine vorteilhafte Endlagendämpfung durch Erhöhung des Handmoments sowie eine zusätzliche Kühlung des Hydraulikmediums durch Umwälzen des Fluids über die Schläuche und den Parameterzweig erzielt werden.

Nachfolgend wird arhand von Zeichnungen jeweils eine mögliche Ausführungsform für eine Standartlenkung sowie für eine geschwindigkeitsabhängige Lenkung erläutert.

Es zeigen:
- Fig. 1:: Standartlenkung mit parallelgeschalteten Druckbegren- zungsventil;
- Fig. 2:: geschwindigkeitsabhängige Lenkeinrichtung mit zusätzlichem erfindungsgemäßen Druckbegren- zungsventil;
- Fig. 3:: Druck-Momentenkennlinien-Diagramm.

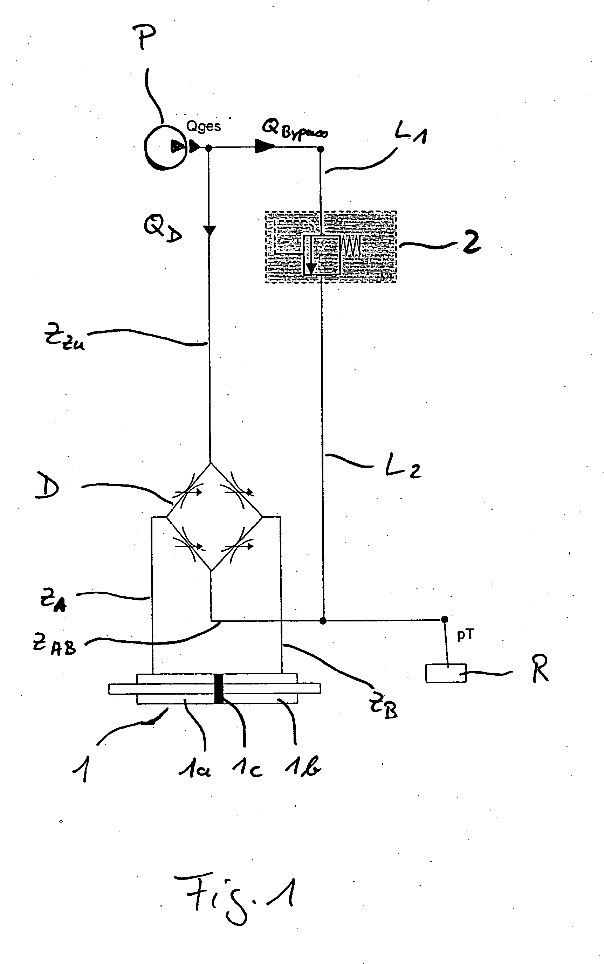

Die Fig. 1 zeigt eine Standartlenkeinrichtung mit hydraulischer Unterstützung. Die Lenkeinrichtung weist eine doppeltwirkende Zylinderkolbeneinheit 1 auf, deren Zylinder durch den Kolben 1c in die beiden Arbeitsräume 1a und 1b unterteilt wird. Über Zuführleitungen Z_{A} und Z_{E} gelangt das Hydraulikmedium vom Drehschieberventil D in die beiden Arbeitsräume 1a und 1b und verstellt den Kolben 1c nach links oder rechts. Das Drehschieberventil D ist über die Zuführleitung Z_{zu} mit der Druckmittelquelle P in Verbindung und über die Rückflussleitung Z_{AB} mit dem Reservoir R für das Hydraulikmedium in Verbindung. Die Druckmittelquelle P, meist eine Hydraulikpumpe, fördert den Volumenstrom Q_{ges}, der, sofern das Druckbegrenzungsventil 2 geschlossen ist, vollständig zum Drehschieberventil D und von dort zu einem der beiden Arbeitsräume 1a, 1b oder dem Reservoir R gelangt. Sobald sich in der Zuführleitung Z_{Zu} in Folge des Lenkens in eine Endstellung, d.h. beim Erreichen des maximalen Lenkeinschlags, ein Druck aufbaut, der größer ist als der beim Druckbegrenzungsventil 2 z.B. mittels einer Feder eingestellte Druck, so öffnet das Druckbegrenzungsventil 2 und es fließ ein Teilvolumenstrom Q_{bypass} des gesamten Volumenstroms Q_{ges} am Drehschieberventil D vorbei zum Reservoir R. Hierdurch wird der Druck in der Zuführleitung Z_{zu} sowie dem jeweiligen Arbeitsraum 1a oder 1b in der Kolben-Zylindereinheit 1 abgeregelt und gleichzeitig das Hydraulikmedium über die Verbindungsleitungen L₁ und L₂ gekühlt. Das Druckbegrenzungsventil 2 kann entweder in der Nähe der Druckmittelquelle P oder dem Drehschieberventil D angeordnet werden. Es ist ferner möglich, das Druckbegrenzungsventil 2 direkt im Lenkgehäuse zu integrieren. Hierzu sind entsprechende Kanäle im Lenkgehäuse sowie z.B. eine federbelastete Kugel als Ventilstellglied anzuordnen.

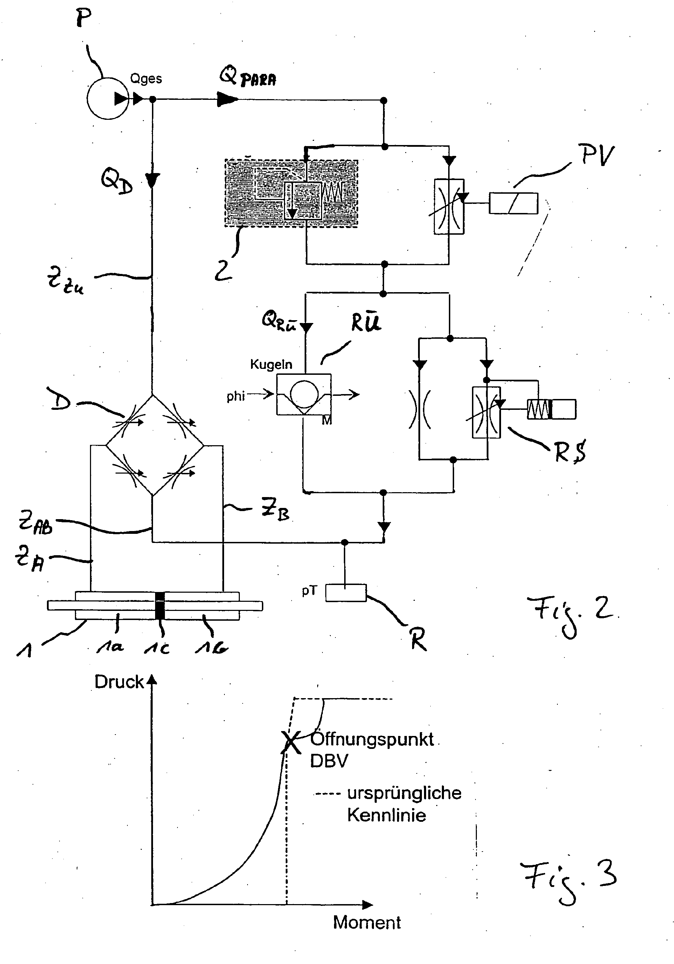

Die Fig. 2 zeigt eine Ausführungsform einer geschwindigkeitsabhängigen Lenkeinrichtung bei der das Druckbegrenzungsventil 2 parallel zu einem geschwindigkeitsgesteuerten Proportionalventil PV geschaltet ist. Das Proportionalventil PV ist in der Regel bei niedrigen Geschwindigkeiten, wie sie z.B. beim Parkieren auftreten, geschlossen. In diesem Fall ist ohne das parallel geschaltete Druckbegrenzungsventil 2 eine Handmomentenerhöhung beim Erreichen einer Endlage mittels der Rückwirkungseinrichtung RÜ nicht mehr möglich, da durch das geschlossene Proportionalventil PV kein Volumenstrom zur Rückwirkungseinrichtung gelangen kann. Bei dieser dem Stand der Technik entsprechenden geschwindigkeitsabhängigen Lenkeinrichtung steigt das Handmoment - wie im Diagramm der Fig. 3 mit der gestrichelten Linie dargestellt, lediglich linear an.

Die Rückwirkungseinrichtung RÜ weist idR Kugeln auf, die auf schräge Flächen mittels des Volumenstroms Q_{RU} gedrückt werden wodurch eine Rückwirkungskraft zur Erhöhung des Handmoments erzeugt wird. Der Rückwirkungseinrichtung ist ein druckgesteuerter Regelschieber RS zur Begrenzung des von der Rückwirkungseinrichtung erzeugten Handmoments parallel geschaltet. Bei niedriger Fahrzeuggeschwindigkeit erhöht sich der Druck in der Zuführleitung Z_{zu} bis zu einem Maximaldruck, wonach dann das erfindungsgemäße Druckbegrenzungsventil 2 öffnet und ein Volumenstrom Q_{PARA} durch das Druckbegrenzungsventil 2 fließt. Dieser Volumenstrom teilt sich auf und fließt zum Teil durch die Rückwirkungseinrichtung RÜ und ab einem bestimmten Druck durch den Regelschieber RS. Der Volumenstrom Q_{RÜ} erzeugt dabei, wie im Diagramm der Fig. 3 mit der durchgezogenen Linie dargestellt, eine Erhöhung des Handmoments bei nicht merklich weiter steigendem Druck in der Zuführleitung Z_{Zu} bzw. dem Arbeitsraum der Kolben-Zylindereinheit 1.

Sofern das Fahrzeug eine Mindestgeschwindigkeit überschreitet, wird die Endlage (maximaler Lenkeinschlag) meist nicht erreicht und somit auch nicht der maximale Druck, bei dem das Druckbegrenzungsventil 2 öffnet. Hierdurch wird die geschwindigkeitsabhängige Steuerung des Proportionalventils PV nicht durch das Druckbegrenzungsventil 2 gestört, so dass der gesamte Volumenstrom Qₚₐᵣₐ durch das Proportionalventil PV fließt.

Das zusätzlich in die vorhandenen Lenkeinrichtungen integrierte Druckbegrenzungsventil 2 beeinflusst somit in der Regel nicht die Lenkeinrichtung, wonach es auch in bestehende Lenksystem problemlos integriert werden kann.

## Patentansprüche

1. Lenkeinrichtung für Fahrzeuge mit einem doppeltwirkenden hydraulischen Arbeitszylinder (1), der von einem im Arbeitszylinder verschieblich gelagerten Kolben (1c) zum Verschwenken mindestens eines Fahrzeugrades in zwei Arbeitsräume (1a, 1b) unterteilt ist, und einer einen Volumenstrom (Q_{ges}) eines Hydraulikmediums erzeugenden Druckmitteleinrichtung (P), wobei das Hydraulikmedium einem Drehschieberventil (D) zugeführt wird, welches den Volumenstrom (Q_{D}) abhängig von der Drehschieberventilposition den Arbeitsräumen (1a, 1b) des doppeltwirkenden hydraulischen Arbeitszylinders (1) oder einem Reservoir (R) für das Hydraulikmedium zuführt, **wobei** ein Druckbegrenzungsventil (2) bei Überschreiten eines bestimmten Drucks in der Zuführleitung (Z_{zu}) zum Drehschieberventil (D) zumindest einen Teil (Q_{bypass}, Q_{PARA}) des gesamten Volumenstroms (Q_{ges}) des Hydraulikmediums vorbei an dem Drehschieberventil (D) insbesondere zum Reservoir (R) leitet, **dadurch gekennzeichnet, dass** das Druckbegrenzungsventil (2) parallel zu einem Proportionalventil (PV) einer geschwindigkeitsabhängigen Lenkeinrichtung geschaltet ist, und dass im Parkierbereich der geschwindigkeitsabhängigen Lenkeinrichtung das Proportionalventil (PV) geschlossen ist und der über das Druckbegrenzungsventil (2) abgezweigte Teilvolumenstrom des Hydraulikmediums zumindest zum Teil über eine Verbindungsleitung zu einer Rückwirkungseinrichtung (RÜ) zur Erzeugung eines zusätzlichen Handmomentes gelangt, bevor der abgezweigte Volumenstrom in das Reservoir (R) gelangt.

2. Lenkeinrichtung nach Anspruch 1, **dadurch gekennzeichnet, dass** der Rückwirkungseinrichtung (RÜ) ein druckgesteuerter Regelschieber (RS) parallel geschaltet ist.

3. Lenkeinrichtung nach Anspruch 1 oder 2, **dadurch gekennzeichnet, dass** das Druckbegrenzungsventil (2) ab einem bestimmten Druck, insbesondere einem Druck von 120 bar, öffnet.

4. Lenkeinrichtung nach einem der vorhergehenden Ansprüche, **dadurch gekennzeichnet, dass** das Druckbegrenzungsventil (2) bei einem sich in der Zuführleitung (Z_{zu}) einstellenden Druck öffnet, der sich beim Endanschlag der gelenkten Fahrzeugräder in der Zuführleitung zum Drehschieberventil (D) einstellt.

## Claims

1. Steering device for vehicles comprising a double-acting hydraulic working cylinder (1), which is subdivided into two working chambers (1a, 1b) by a piston (1c) mounted displaceably in the working cylinder for swivelling at least one vehicle wheel, and a pressure medium device (P) that generates a volumetric flow (Q_{ges}) of a hydraulic medium, wherein the hydraulic medium is supplied to a rotary slide valve (D) that supplies the volumetric flow (Q_{D}) in dependence upon the rotary slide valve position to the working chambers (1a, 1b) of the double-acting hydraulic working cylinder (1) or to a reservoir (R) for the hydraulic medium, wherein a pressure control valve (2), upon exceeding of a specific pressure in the supply line (Z_{zu}) to the rotary slide valve (D), conveys at least a portion (Q_{bypass}, Q_{PARA}) of the total volumetric flow (Q_{ges}) of the hydraulic medium past the rotary slide valve (D), in particular to the reservoir (R), **characterized in that** the pressure control valve (2) is connected in parallel to a proportional valve (PV) of a speed-dependent steering device, and that in the parking range of the speed-dependent steering device the proportional valve (PV) is closed and the partial volumetric flow of the hydraulic medium that is diverted via the pressure control valve (2) passes at least in part through a connection line to a reaction device (RÜ) for generating an additional manual torque before the diverted volumetric flow passes into the reservoir (R).

2. Steering device according to claim 1, **characterized in that** a pressure-controlled control slide valve (RS) is connected in parallel to the reaction device (RÜ).

3. Steering device according to claim 1 or 2, **characterized in that** the pressure control valve (2) opens from a specific pressure, in particular a pressure of 120 bar.

4. Steering device according to one of the preceding claims, **characterized in that** the pressure control valve (2) opens in the event of a pressure arising in the supply line (Z_{Zu}) that arises in the case of the end stop of the steered vehicle wheels in the supply line to the rotary slide valve (D).

## Revendications

1. Système de direction pour véhicule automobile, comprenant un vérin ou cylindre de travail hydraulique (1) à double effet, qui est subdivisé en deux chambres de travail (1a, 1b), par un piston (1c) monté coulissant dans le cylindre de travail pour faire pivoter au moins une roue de véhicule, et un dispositif de fluide de pression (P) engendrant un débit-volume (Q_{ges}) d'un fluide hydraulique, système de direction dans lequel le fluide hydraulique est amené à une vanne à tiroir rotatif (D) qui amène le débit-volume (Q_{D}), en fonction de la position de la vanne à tiroir rotatif, aux chambres de travail (1a, 1b) du cylindre de travail hydraulique (1) à double effet ou à un réservoir (R) pour le fluide hydraulique, et dans lequel une vanne de limitation de pression (2), lors du dépassement d'une pression déterminée dans la conduite d'alimentation (Z_{Zu}) de la vanne à tiroir rotatif (D), fait passer au moins une partie (Q_{bypass}, Qp_{ARA}) du débit-volume total (Q_{ges}) du fluide hydraulique en-dehors de la vanne à tiroir rotatif (D), notamment en l'envoyant au réservoir (R),
**caractérisé en ce que** la vanne de limitation de pression (2) est montée en parallèle à une vanne proportionnelle (PV) d'un système de direction assujetti à la vitesse, et **en ce que** dans la plage du système de direction assujetti à la vitesse, correspondant au stationnement, la vanne proportionnelle (PV) est fermée, et le débit-volume partiel de fluide hydraulique dérivé par l'intermédiaire de la vanne de limitation de pression (2) parvient, au moins en partie, par l'intermédiaire d'une conduite de liaison, à un dispositif de rétroaction (RÜ) pour produire un couple manuel supplémentaire, avant que le débit-volume dérivé ne
parvienne dans le réservoir (R).

2. Système de direction selon la revendication 1, **caractérisé en ce qu'**une vanne de réglage à tiroir (RS) pilotée par la pression, est montée en parallèle au dispositif de rétroaction (RÜ).

3. Système de direction selon la revendication 1 ou la revendication 2, **caractérisé en ce que** la vanne de limitation de pression (2) ouvre à partir d'une pression déterminée, notamment une pression de 120 bar.

4. Système de direction selon l'une des revendications précédentes, **caractérisé en ce que** la vanne de limitation de pression (2) ouvre lorsque règne, dans la conduite d'alimentation (Z_{Zu}), une pression qui s'établit dans la conduite d'alimentation de la vanne à tiroir rotatif (D) lors de la venue en butée extrême des roues de véhicule braquées.
